# EUROPÄISCHE PATENTSCHRIFT

(11) **EP 0 601 430 B1**
(45) Veröffentlichungstag und Bekanntmachung des Hinweises auf die Patenterteilung: **09.04.1997**
(21) Anmeldenummer: 93119194.4
(22) Anmeldetag: 29.11.1993
(51) Int. Cl.: C05F 17/00, C05F 17/02

(54) **Verfahren zum Kompostieren von Abfällen**
Waste composting process
Procédé de compostage de déchets

(30) Priorität: 11.12.1992 DE 4241894
(43) Veröffentlichungstag der Anmeldung: 15.06.1994
(73) Patentinhaber: SÜDDEUTSCHE ETNA-WERK GMBH, D-81675 München (DE)
(72) Erfinder: Hartwig, Manfred, D-85567 Grafing (DE); Dürner, Gustav, D-81827 München (DE)
(74) Vertreter: Strasse, Joachim, Dipl.-Ing.

(56) Entgegenhaltungen:
- DATABASE WPI Section Ch, Week 9148, Derwent Publications Ltd., London, GB; Class D16, AN 91-348964 & JP-A-3 232 437 (TAKAYAMA M) 16. Oktober 1991
- DATABASE WPI Section Ch, Week 9140, Derwent Publications Ltd., London, GB; Class A97, AN 91-288472 & CA-A-2 008 525 (LYONS D S) 25. Juli 1991

## Beschreibung

Die Erfindung betrifft ein Verfahren zum Kompostieren von organischen Abfällen, insbesondere Hausmüll, bei dem das Rottegut unter vorbestimmten physikalischen Bedingungen mikrobiell abgebaut wird.

Bei einem bekannten Verfahren zur Kompostierung von Abfällen wird das Rottegut in einen Behälter eingebracht und unter Luftzuführung mikrobiell abgebaut. Dabei wird angestrebt, daß eine möglichst große CO₂-Menge pro Zeit erzeugt wird. Der CO₂-Abbau wird über die Menge an zugeführter Luft pro Zeit geregelt. Um jedoch die Luftzuführung kontrollieren und steuern zu können, sind aufwendige Meßverfahren, wie z. B. die CO₂-Messung, die Wärmemengen-Messung, die O₂-Messung und/oder die Gewichtsmessung notwendig.

Neben dem hohen apparativen Aufwand hat dieses bekannte Verfahren den Nachteil, daß die ausschließliche Steuerung der während des Rotteprozesses im Rottegut auftretenden physikalischen Bedingungen über die Menge der zugeführten Luft pro Zeit nicht geeignet ist, eine möglichst schnelle und vollständige Kompostierung organischer Abfälle zu gewährleisten, da z.B. auf Temperaturänderungen im Rottegut während der Fermentationsphase nicht exakt und schnell genug reagiert werden kann. Dadurch können im Rottegut Temperaturschwankungen auftreten, die zu einem verringerten Wachstum oder sogar zum Absterben von für den Rotteprozess wichtigen Mikroorganismen wie Bakterien und Pilzen führen können.

Aufgabe der Erfindung ist es, ein Verfahren zum Kompostieren von organischen Abfällen, insbesondere Hausmüll, bereitzustellen, welches eine möglichst schnelle und vollständige Kompostierung der Abfälle unter Berücksichtigung der während des Rottevorganges auftretenden physikalischen Bedingungen gewährleistet.

Zur Lösung dieser Aufgabe dienen die Merkmale des unabhängigen Anspruches.

Vorteilhafte Ausgestaltungen sind in den Unteransprüchen beschrieben.

Bei dem erfindungsgemäßen Verfahren wird Rottegut vorteilhafterweise auf eine flexible Matte aufgebracht, welche als Wärmetauscher ausgebildet ist. Nach Aufwickeln der Matte mit dem dazwischenliegenden Rottegut kann eine gleichmäßige Zuführung von Wärmeenergie über die Matte in das Rottegut sowie eine Regelung der Wärme-Mengen im Rottegut auf einen vorbestimmten, konstanten Wert, gegebenenfalls durch Ab- oder Zufuhr von Wärme aus dem Rottegut über die Matte erfolgen. So wird während der Anfahrphase des Verfahrens dem Abfallrottegemisch vorteilhafterweise Wärme zugeführt, so daß die Kompostierung schnell und zuverlässig in Gang gebracht werden kann. In der darauf folgenden Fermentationsphase tritt dagegen eine starke natürliche Wärmeentwicklung auf, die erfindungsgemäß durch Abfuhr von Wärme auf einen vorbestimmten, konstanten, den Fermentationsprozeß fördernden Wert eingestellt werden kann. Somit ist eine relativ schnelle und vollständige Kompostierung der auf die als Wärmetauscher ausgebildete Matte aufgetragenen organischen Abfälle gewährleistet.

Vorteilhafterweise erfolgt durch den Aufwickelvorgang der Matte eine Vorpressung des Rottegutes, wodurch sich der Raumbedarf bei dem erfindungsgemäßen Verfahren erheblich reduziert.

In einer besonders bevorzugten Ausführungsform des erfindungsgemäßen Verfahrens wird die Matte mit dem aufliegenden Rottegut auf eine Hohlwelle aufgewickelt, wobei die Hohlwelle mindestens einen Saugluftanschluß aufweist. Vorteilhaferweise wird dadurch während des gesamten Kompostiervorganges ein Unterdruck in der Hohlwelle erzeugt, der einen ausreichenden Lufttransport von außen durch die gasdurchlässige Matte zur Hohlwelle hin gewährleistet. Gleichzeitig ist dadurch die ausreichende Luftzufuhr zum zwischen den Wickelungen der Matte liegenden Rottegut gewährleistet.

Weitere Einzelheiten, Merkmale und Vorteile ergeben sich aus der folgenden Beschreibung eines zeichnerisch dargestellten Ausführungsbeispiels.

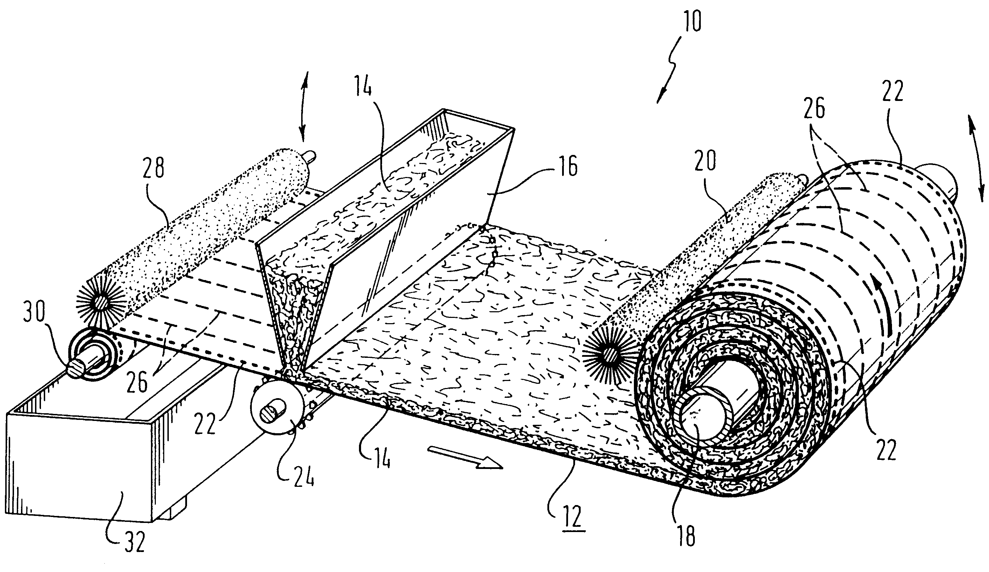

Die Figur zeigt dabei eine schematisch dargestellte Kompostiervorrichtung 10, welche zur Durchführung des erfindungsgemäßen Verfahrens geeignet ist.

In einem ersten erfindungsgemäßen Verfahrensschritt a) wird ein zu kompostierendes Abfallrottegemisch 14 über eine Auftragsvorrichtung 16 auf eine flexible Matte 12 aufgetragen. Die flexible Matte 12 weist seitliche Perforationen 22 auf, in die Zapfen einer Führungswelle 24 eingreifen. Dadurch ist gewährleistet, daß die Matte 12 lagegenau geführt werden kann. In einem besonders bevorzugten Ausführungsbeispiel ist die Matte 12 als Wärmetauscher ausgebildet. Hierzu weist die Matte 12 innere Wege 26 auf, die einen den Wärmeaustausch bewirkenden Flüssigkeits- und/oder Gastransport ermöglichen. Dabei kann die Matte 12 als Hohlmatte ausgebildet sein, oder eine Vielzahl von Schläuchen aufweisen. Des weiteren besteht die Matte 12 aus gasdurchlässigem und mikrobiell nicht abbaubarem Material. Durch die Materialeigenschaften der Matte 12 ist gewährleistet, daß ein ungehinderter Luftzutritt zum Rottegut 14 jederzeit möglich ist und die Matte 12 selbst nicht durch während des Kompostiervorgangs entstehende Säuren und ähnliches angegriffen oder gar zerstört wird.

In einer bevorzugten Ausführungsform besteht die Matte 12 aus fluorkohlenwasserstoff-haltigem Kunststoff.

In einem zweiten erfindungsgemäßen Verfahrensschritt b) wird die Matte 12 mit dem Rottegut 14 auf eine sich drehende Hohlwelle 18 aufgewickelt. Die Hohlwelle 18 weist dabei mindestens einen Wasseranschluß und/oder mindestens einen Saugluftanschluß (nicht dargestellt) auf. Die Wasseranschlüsse der Hohlwelle 18 sind mit den inneren Wegen 26 der Matte 12 verbunden. Über eine mit der Hohlwelle 18 verbundene Pumpe (nicht dargestellt) zur Wasserförderung bilden die Wasseranschlüsse der Hohlwelle 18 mit den inneren Wegen 26 der Matte 12 ein geschlossenes Wassersystem.

In einem weiteren erfindungsgemäßen Verfahrensschritt c) wird dem Rottegut 14 Wärmeenergie zugeführt, wobei dies vorzugsweise über die Zufuhr einer optimalen Menge erwärmten Wassers in den inneren Wegen 26 der Matte 12 erfolgt. Der Verfahrensschritt c) ist normalerweise notwendig, um ein schnelles und sicheres Anfahren des Kompostiervorganges zu gewährleisten.

In dem sich anschließenden Fermentationsvorgang wird die im Rottegut 14 auftretende Wärmemenge gemäß dem erfindungsgemäßen Verfahrensschritt d) über die Zufuhr einer optimalen Kühlwassermenge in den inneren Wegen 26 der Matte 12 auf einen vorbestimmten, konstanten Temperaturwert geregelt.

Dabei wird die in den Verfahrensschritten c) und d) zugeführte Warm- bzw. Kühlwassermenge pro Zeit derart eingestellt, daß eine vorgegebene Temperatur im Rottegut 14 von 60°C nicht überschritten wird. Durch das Konstanthalten der Temperatur auf einen Wert, der deutlich unterhalb der Pasteurisierungstemperatur liegt, wird das Absterben von für den Fermentationsvorgang notwendigen Bakterien und/oder Pilzen weitestgehend verhindert. Damit wird eine schnellere und nahezu vollständige Kompostierung des Rottegutes 14 erreicht.

Zur Bestimmung der optimalen Warm- bzw. Kühlwassermenge pro Zeit wird die Temperaturdifferenz zwischen An- und Ablauf des Wassersystems (nicht dargestellt) gemessen und vorzugsweise rechnergesteuert ausgewertet und geregelt.

Nach Beendigung des Kompostiervorgangs wird die Matte 12 mit Hilfe einer Welle 30 von der Hohlwelle 18 abgewickelt. Das Rottegut 14 wird dabei von einer ersten Abstreifvorrichtung 20 von der Oberfläche der Matte 12 abgestreift. Eine über einem Auffangbehälter 32 angeordnete zweite Abstreifvorrichtung 28 fördert das kompostierte Rottegut 14 in den Behälter 32. Die Hohlwelle 18, die Welle 30 und die beiden Abstreifvorrichtungen 20 und 28 sowie die Führungswelle 24 sind vorzugsweise in ihrer Lage zueinander in der Vertikalen verstellbar.

In einem besonders bevorzugten Ausführungsbeispiel wird zwischen der Hohlwelle 18 und der sie umgebenden Matte 12 ein Unterdruck aufgebaut, der einen ausreichende Luftzufuhr zum Rottegut 14 von außen in Richtung der Hohlwelle 18 gewährleistet.

Je nach der Zusammensetzung und den zu kompostierenden Mengen an organischen Abfällen ist es möglich, nach jedem der Verfahrensschritte (a) bis (d) den Kompostiervorgang zu unterbrechen und gegebenenfalls neu zu starten. Zeitaufwendige Belade- bzw. Entladevorgänge werden dabei minimiert. Das Rottegut 14 muß während des gesamten Verfahrens normalerweise nicht umgeschichtet werden.

In einer bevorzugten Ausführungsform wird die Matte 12 mit dem aufliegenden Rottegut 14 während des Verfahrensschrittes (d) kontinuierlich weiter auf die Hohlwelle 18 aufgewickelt. Dadurch kann die während des Kompostiervorgangs auftretende Volumenverminderung des Rotteguts 14 ausgeglichen werden und es ist gewährleistet, daß die als Wärmetauscher ausgebildete Matte 12 zu jeder Zeit des Kompostiervorgangs innigen Kontakt zum Rottegut 14 hält. Dadurch werden unnötige Energieverluste vermieden. Durch die Kondensation des sich im Rottegut 14 bzw. in der durchgeleiteten Luft befindlichen Wasserdampfes an der Matte 12 wird eine gleichmäßige hohe Luftfeuchtigkeit im Rottegut 14 gewährleistet. Eine über den gesamten Kompostierungsvorgang gleichmäßig hohe Luftfeuchtigkeit bevorzugt das Wachstum der für den Fermentationsvorgang notwendigen Bakterien und Pilze, wodurch eine schnelle und intensive Kompostierung des Rotteguts 14 erreicht wird.

Mit dem erfindungsgemäßen Verfahren zum Kompostierung von organischen Abfällen ist es möglich, das ursprünglich anfallende Abfallvolumen auf ca. 50 % zu reduzieren. Für eine Masse von 400 kg organischen Hausmülls durchschnittlicher Zusammensetzung besteht dabei lediglich ein biologischer Luftbedarf von ca. 1,6 m³ pro Stunde und ein Kühlwasserbedarf von ungefähr 1 m³ pro Stunde.

## Patentansprüche

1. Verfahren zum Kompostieren von organischen Abfällen, insbesondere Hausmüll, bei dem das Rottegut unter vorbestimmten physikalischen Bedingungen mikrobiell abgebaut wird,
**dadurch gekennzeichnet**, daß das Verfahren folgende Schritte umfaßt:
a) Aufbringen des Rottegutes (14) auf eine flexible Matte (12);
b) Aufwickeln der Matte (12);
c) Zufuhr von Wärmeenergie über die Matte (12) in das Rottegut (14);
d) Regelung der Wärme-Mengen im Rottegut (14) auf einen vorbestimmten, konstanten Wert, gegebenenfalls durch Abfuhr von Wärme aus dem Rottegut (14) über die Matte (12);
e) Abwickeln der Matte (12) und Abtrag des kompostierten Rottegutes (14).

2. Verfahren nach Anspruch 1,
**dadurch gekennzeichnet**, daß zwischen den Schritten d) und e) eine Pasteurisationsphase mit Abschalten der Kühlung und verstärkter Belüftung zur Trocknung des verrotteten Gutes stattfindet.

3. Verfahren nach Anspruch 1, oder 1 und 2,
**dadurch gekennzeichnet**, daß nach jedem der Verfahrensschritte a) bis d) der Kompostiervorgang unterbrochen und gegebenenfalls neu gestartet werden kann.

4. Verfahren nach wenigstens einem der vorhergehenden Ansprüche,
**dadurch gekennzeichnet**, daß das Rottegut (14) nicht umgeschichtet wird.

5. Verfahren nach wenigstens einem der vorhergehenden Ansprüche,
**dadurch gekennzeichnet**, daß die Matte (12) als Wärmetauscher ausgebildet ist.

6. Verfahren nach Anspruch 5,
**dadurch gekennzeichnet**, daß die Matte (12) innere Wege (26) für einen den Wärmeaustausch bewirkenden Flüssigkeits- und/oder Gastransport aufweist.

7. Verfahren nach Anspruch 6,
**dadurch gekennzeichnet**, daß die Matte (12) als Hohlmatte ausgebildet ist.

8. Verfahren nach Anspruch 6,
**dadurch gekennzeichnet**, daß die Matte (12) eine Vielzahl von Schläuchen aufweist.

9. Verfahren nach Anspruch 5,
**dadurch gekennzeichnet**, daß die Matte (12) aus gasdurchlässigem Material besteht.

10. Verfahren nach Anspruch 5,
**dadurch gekennzeichnet**, daß die Matte (12) aus mikrobiell nicht-abbaubarem Material besteht.

11. Verfahren nach Anspruch 10,
**dadurch gekennzeichnet**, daß die Matte (12) aus fluorkohlenwasserstoff-haltigem Kunststoff besteht.

12. Verfahren nach wenigstens einem der vorhergehenden Ansprüche,
**dadurch gekennzeichnet**, daß die Matte (12) mindestens eine seitliche Perforation (22) aufweist.

13. Verfahren nach wenigstens einem der vorhergehenden Ansprüche,
**dadurch gekennzeichnet**, daß die Matte (12) mit dem Rottegut (14) im Verfahrensschritt b) auf eine sich drehende Hohlwelle (18) aufgewickelt wird.

14. Verfahren nach wenigstens einem der vorhergehenden Ansprüche,
**dadurch gekennzeichnet**, daß die Matte (12) mit dem aufliegenden Rottegut (14) während des Verfahrensschrittes d) kontinuierlich weiter auf die Hohlwelle (18) aufgewickelt wird.

15. Verfahren nach wenigstens einem der vorhergehenden Ansprüche,
**dadurch gekennzeichnet**, daß die Hohlwelle (18) mindestens einen Wasseranschluß und/oder mindestens einen Saugluftanschluß aufweist.

16. Verfahren nach wenigstens einem der vorhergehenden Ansprüche,
**dadurch gekennzeichnet**, daß die Zufuhr von Wärmeenergie gemäß dem Verfahrensschritt c) über die Zufuhr einer optimalen Menge erwärmten Wassers in den inneren Wegen (26) der Matte (12) erfolgt.

17. Verfahren nach wenigstens einem der vorhergehenen Ansprüche,
**dadurch gekennzeichnet**, daß die Regelung der Wärme-Mengen gemäß dem Verfahrensschritt d) über die Zufuhr einer optimalen Kühlwassermenge in den inneren Wegen (26) der Matte (12) erfolgt.

18. Verfahren nach wenigstens einem der vorhergehenden Ansprüche,
**dadurch gekennzeichnet**, daß die zugeführte Kühl- bzw. Warmwassermenge pro Zeit derart eingestellt ist, daß eine vorgegebene Temperatur im Rottegut (14) von 60°C nicht überschritten wird.

19. Verfahren nach wenigstens einem der vorhergehenden Ansprüche,
**dadurch gekennzeichnet**, daß die Temperaturmessung im An- und Ablauf des Wassersystems erfolgt.

20. Verfahren nach wenigstens einem der vorhergehenden Ansprüche,
**dadurch gekennzeichnet**, daß die Zufuhr der optimalen Menge Kühl- bzw. Warmwasser rechnergesteuert erfolgt.

21. Verfahren nach Anspruch 2,
**dadurch gekennzeichnet**, daß die Pasteurisierung durch Abschalten der Kühlung zu einer vorausberechneten Zeitpunkt eingeleitet wird.

22. Verfahren nach wenigstens einem der vorhergehenden Ansprüche,
**dadurch gekennzeichnet**, daß zwischen der Hohlwelle (18) und der sie umgebenen Matte (12) ein Unterdruck aufgebaut wird, so daß eine ausreichende Luftzufuhr zum Rottegut (14) gewährleistet ist.

23. Verfahren nach Anspruch 1,
**dadurch gekennzeichnet**, daß die inneren Wege der Matte (12) während des Aufwickelns b) unter Druck gesetzt werden.

## Claims

1. Process for composting organic waste, in particular household garbage, in which the waste to be composted is decomposed microbially under predetermined physical conditions,
**characterized by**
the following steps:
a) depositing the waste (14) to be composted on a flexible mat (12);
b) rolling up said mat (12);
c) supplying thermal energy via said mat (12) into the waste (14) to be composted;
d) adjusting the amount of heat in the waste (14) to be composted to a predetermined constant value, if necessary by educing heat from said waste (14) via said mat (12);
(e) unrolling said mat (12) and removing the composted waste (14) therefrom.

2. The process of claim 1,
**characterized in that**
a pasteurization phase takes place between steps d) and e) in which cooling is interrupted and airing is increased for drying the composted waste.

3. The process of claim 1, or of claims 1 and 2,
**characterized in that**
the composting process may be interrupted and restarted, if desired, after each of steps a) to d).

4. The process of at least one of the preceding claims
**characterized in that**
the waste (14) to be composted is not rearranged.

5. The process of at least one of the preceding claims
**characterized in that**
the mat (12) is formed as a heat-exchanger.

6. The process of claim 5
**characterized in that**
within said mat (12), paths (26) are provided for a fluid and/or gas transport which will effect the heat exchange.

7. The process of claim 6
**characterized in that**
said mat (12) is formed as a hollow mat.

8. The process of claim 6
**characterized in that**
said mat (12) includes a plurality of tubes.

9. The process of claim 5
**characterized in that**
said mat (12) is made of gas-permeable material.

10. The process of claim 5
**characterized in that**
said mat (12) is made of a material which is resistant to microbial decomposition.

11. The process of claim 10
**characterized in that**
said mat (12) is made of a fluorocarbon-containing plastic.

12. The process of at least one of the preceding claims
**characterized in that**
said mat (12) has at least one lateral perforation (22).

13. The process of at least one of the preceding claims
**characterized in that**
in procedural step b) said mat (12) bearing said waste (14) to be composted is wound upon a rotating hollow shaft (18).

14. The process of at least one of the preceding claims
**characterized in that**
in procedural step d) said mat (12) bearing said waste (14) to be composted is continuously wound further upon said hollow shaft (18).

15. The process of at least one of the preceding claims
**characterized in that**
said hollow shaft (18) has at least one connection for water and/or at least one connection for suction air.

16. The process of at least one of the preceding claims
**characterized in that**
thermal energy is supplied according to procedural step c) by supplying an optimal amount of heated water via the paths (26) provided within said mat (12).

17. The process of at least one of the preceding claims
**characterized in that**
the amounts of heat are adjusted according to procedural step d) by supplying an optimal amount of cooling water via the paths (26) provided within said mat (12).

18. The process of at least one of the preceding claims
**characterized in that**
the amount of cooling water or heated water per unit of time is adjusted such that a predetermined temperature of 60°C within said waste (14) is not exceeded.

19. The process of at least one of the preceding claims
**characterized in that**
the temperature is measured in the inlet and outlet of the water system.

20. The process of at least one of the preceding claims
**characterized in that**
the supply of the optimal amount of cooling water or heated water is computer-controlled.

21. The process of claim 2
**characterized in that**
pasteurization is initiated by switching off the cooling system at a precalculated time.

22. The process of at least one of the preceding claims
**characterized in that**
a negative pressure is established between the hollow shaft (18) and the mat (12) surrounding it so as to ensure sufficient supply of air to the waste (14) to be composted.

23. The process of claim 1
**characterized in that**
the paths provided within said mat (12) are pressurized during the rolling up step b).

## Revendications

1. Procédé de compostage de déchets organiques, en particulier d'ordures ménagères, dans le cas duquel le produit de pourrissage est décomposé microbiologiquement dans des conditions physiques prédéfinies, caractérisé en ce que le procédé comporte les étapes suivantes:
a) dépôt du produit de pourrissage (14) sur un tapis flexible (12);
b) enroulement du tapis (12);
c) apport d'énergie calorifique, au-dessus du tapis (12), dans le produit de pourrissage (14);
d) réglage des quantités de chaleur dans le produit de pourrissage (14) à une valeur constante prédéterminée, éventuellement par évacuation de la chaleur du produit de pourrissage (14) par l'intermédiaire du tapis (12);
e) déroulement du tapis (12) et enlèvement du produit de pourrissage (14) composté.

2. Procédé suivant la revendication 1, caractérisé en ce qu'entre les étapes d) et e), a lieu une phase de pasteurisation avec arrêt du refroidissement et renforcement de l'apport d'air pour sécher le produit après pourrissement.

3. Procédé suivant la revendication 1, ou suivant les revendications 1 et 2, caractérisé en ce qu'après chacune des étapes a) à d) du procédé, l'opération de compostage peut être interrompue, puis, éventuellement, être démarrée de nouveau.

4. Procédé suivant au moins l'une des revendications précédentes, caractérisé en ce que le produit de pourrissage (14) n'est pas retourné.

5. Procédé suivant au moins l'une des revendications précédentes, caractérisé en ce que le tapis (12) est réalisé sous la forme d'un échangeur de chaleur.

6. Procédé suivant la revendication 5, caractérisé en ce que le tapis (12) présente des canaux internes (26) pour le transport de liquide et/ou de gaz créant l'échange de chaleur.

7. Procédé suivant la revendication 6, caractérisé en ce que le tapis (12) est réalisé sous la forme d'une natte creuse.

8. Procédé suivant la revendication 6, caractérisé en ce que le tapis (12) présente une multiplicité de flexibles.

9. Procédé suivant la revendication 5, caractérisé en ce que le tapis (12) est constitué d'un matériau perméable aux gaz.

10. Procédé suivant la revendication 5, caractérisé en ce que le tapis (12) est constitué d'un matériau non décomposable microbiologiquement.

11. Procédé suivant la revendication 10, caractérisé en ce que le tapis (12) est constitué d'une matière plastique hydrofluorocarbonée.

12. Procédé suivant au moins l'une des revendications précédentes, caractérisé en ce que le tapis (12) présente au moins une perforation latérale (22).

13. Procédé suivant au moins l'une des revendications précédentes, caractérisé en ce que le tapis (12), avec le produit de pourrissage (14), est enroulé sur un arbre creux tournant (18), au cours de l'étape b) du procédé.

14. Procédé suivant au moins l'une des revendications précédentes, caractérisé en ce que le tapis (12), avec le produit de pourrissage (14) reposant sur lui, est de nouveau enroulé en continu sur l'arbre creux (18).

15. Procédé suivant au moins l'une des revendications précédentes, caractérisé en ce que l'arbre creux (18) présente au moins un raccord pour l'eau et/ou au moins un raccord d'aspiration d'air.

16. Procédé suivant au moins l'une des revendications précédentes, caractérisé en ce que l'apport d'énergie calorifique suivant l'étape c) du procédé se fait par apport d'une quantité optimale d'eau réchauffée dans les canaux internes (26) du tapis (12).

17. Procédé suivant au moins l'une des revendications précédentes, caractérisé en ce que la régulation des quantités de chaleur suivant l'étape d) du procédé, se fait par apport d'une quantité optimale d'eau froide dans les canaux internes (26) du tapis (12).

18. Procédé suivant au moins l'une des revendications précédentes, caractérisé en ce que la quantité d'eau froide ou d'eau chaude, apportée par unité de temps, est réglée de façon à ne pas dépasser une température prédéterminée de 60°C dans le produit de pourrissage (14).

19. Procédé suivant au moins l'une des revendications précédentes, caractérisé en ce que la mesure de température se fait à l'arrivée et à l'évacuation dans le système d'eau.

20. Procédé suivant au moins l'une des revendications précédentes, caractérisé en ce que l'apport de la quantité optimale d'eau froide ou d'eau chaude est commandée par ordinateur.

21. Procédé suivant la revendication 2, caractérisé en ce que la pasteurisation est lancée, par arrêt du refroidissement, à un instant prédéterminé par calcul.

22. Procédé suivant au moins l'une des revendications précédentes, caractérisé en ce qu'entre l'arbre creux (18) et le tapis (12) qui l'entoure, il s'établit une dépression, de façon à assurer un apport suffisant d'air vers le produit de pourrissage (14).

23. Procédé suivant la revendication 1, caractérisé en ce que les canaux internes du tapis (12) sont mis sous pression pendant l'enroulement b).
